# EUROPEAN PATENT SPECIFICATION

(11) **EP 2 883 316 B1**
(45) Date of publication and mention of the grant of the patent: **26.10.2016**
(21) Application number: 12745866.9
(22) Date of filing: 10.08.2012
(51) Int. Cl.: H04J 3/06, H04L 12/26

(54) **LATENCY DETERMINATION IN SUBSTATION NETWORKS**
LATENZBESTIMMUNG IN SUBSTATIONSNETZWERKEN
DÉTERMINATION DE LA LATENCE DANS DES RÉSEAUX DE SOUS-STATIONS

(43) Date of publication of application: 17.06.2015
(73) Proprietor: ABB Research Ltd., 8050 Zürich (CH)
(72) Inventor: THRYBOM, Linus, S-72242 Västerås (SE)
(74) Representative: Ahrengart, Kenneth
(86) International application number: PCT/EP2012/065654
(87) International publication number: WO 2014/023356

(56) References cited:
- "IEEE Standard Profile for Use of IEEE 1588 Precision Time Protocol in Power System Applications;IEEE Std C37.238-2011", IEEE STANDARD, IEEE, PISCATAWAY, NJ, USA, 14 July 2011 (2011-07-14), pages 1-66, XP017694614, ISBN: 978-0-7381-6721-3
- "IEEE Standard for a Precision Clock Synchronization Protocol for Networked Measurement and Control Systems;IEEE Std 1588-2008 (Revision of IEEE Std 1588-2002) ED - Anonymous", IEEE STANDARD; [IEEE STANDARD], IEEE, PISCATAWAY, NJ, USA, 24 July 2008 (2008-07-24), pages c1-269, XP017604130, ISBN: 978-0-7381-5400-8
- CHRISTOPH BRUNNER ET AL: "Smarter time sync: Applying the IEEE PC37.238 standard to power system applications", PROTECTIVE RELAY ENGINEERS, 2011 64TH ANNUAL CONFERENCE FOR, IEEE, 11 April 2011 (2011-04-11), pages 91-102, XP031972549, DOI: 10.1109/CPRE.2011.6035608 ISBN: 978-1-4577-0494-9

## Description

### TECHNICAL FIELD

The present disclosure generally relates to communication between substations, and in particular to latency determination in substation networks.

### BACKGROUND

A substation is typically a part of an electrical generation, transmission, and distribution system. In general terms, substations transform voltage from high to low, or the reverse, and/or perform any of several other functions associated with the electrical generation, transmission, and distribution system. Electric power may flow through several substations between the power generating plant and the consumer, and its voltage may change in several steps.

The substation thus has a function of supplying power to consumers and includes a protection system that cuts off the supply of power to a position where a problem, such as an electric leakage, a ground fault, or the failure of a device, occurs immediately after the problem occurs. This so-called line differential protection application has until recently mainly been based on wide area networks (WAN) using time division multiplexing (TDM) technologies like Synchronous Optical Networking (SONET) and Synchronous Digital Hierarchy (SDH). In a TDM network all communication is synchronous and the communication latency as well as the jitter are therefore easy to retrieve. That these networks are synchronous by nature has been beneficiary for the Intelligent Electronic Device (IED) line differential protection application, since this application needs to compare the data measured at the very same time, sampled by two distant substations. Time synchronisation for electronic devices in power systems has traditionally been realised through use of a pulse per second (PPS) signal output of a Global Positioning System (GPS) at the substation, Inter-range instrumentation group time code B (IRIG-B) or other signals carried on dedicated distribution wiring. GPS is a highly accurate solution but does not scale well due to cost and complications of attaching antennas to every device to be synchronised. Further, typical implementations of an unmodulated (DC-shifted mode) IRIG-B timing protocol in IEDs provide accuracy in the 100 µs range; this is generally accurate enough to be used for some time stamping applications such as sequence-of-events recording and fault waveform capture, but typically not accurate enough for process busses such as the IEC 61850 process bus or applications which require < 1µs accuracy. Additionally IRIG-B installations typically require dedicated coax or twisted pair cable to transport the timing signals and a single output can only drive a limited number of devices, depending on cable length and device load. These restrictions limit the scalability and increase deployment and maintenance costs for IRIG-B.

The prolific growth in the number of IEDs capable of Ethernet communications has promoted new methods of time synchronisation based on the Network Time Protocol (NTP) or the Simple Network Time Protocol (SNTP) and the IEEE 1588 network protocols (such as the Precision Time Protocol, PTP). Hence, existing SDH/SONET networks are currently being replaced by the telecom operators to packet switched WAN networks. This change is primarily driven by cost and by the diversified communication needs which the telecom operators must provide to its customers.

However, packet switched WANs do not provide the same synchronous mechanisms as TDM networks. The packet latency may instead differ between each packet depending on the traffic situation in the network.

Additionally, existing NTP/SNTP have the advantage of being able to synchronise computers over a local area network, but may not have the accuracy needed for most substation applications such as IEC 61850-9-2 Process Bus or IEEE C37.118-2005 Synchrophasors. Typical SNTP implementations under normal network conditions get within 2-3 ms; even a tuned network running SNTP can only achieve accuracy in the millisecond range. This falls far short of the requirement for utility synchronisation applications. Also the timing performance under SNTP is disturbed by heavily loaded networks.

There is hence a need to improve latency determination between different substations in a substation network.

The document "IEEE Standard Profile for Use of IEEE 1588 Precision Time Protocol in Power System Applications; IEEE Std C37.238-2011", IEEE STANDARD, 14 July 2011, specifies a common profile for the use of Precision Time Protocol (PTP) of IEEE Std 1588-2008 in power system protection, control, automation, and data communication applications utilizing an Ethernet communications architecture.

### SUMMARY

In view of the above, a general object of the present disclosure is to provide methods, a computer program and electronic devices for latency determination in substation networks.

The ideas presented in the disclosure are based on the understanding that although the Precision Time Protocol (PTP) standardised in IEEE 1588 is designed to synchronize real-time clocks in the nodes (such as substations) of a distributed system (such as an electrical generation, transmission, and distribution system) that communicate using a network, the PTP does not disclose how to use these clocks. Instead this may be specified by the respective application areas.

The present invention relates to a method according to independent claims 1 and 3, a computer program according to independent claim 13, a computer program product according to independent claim 14, a device according to independent claims 15 and 16, and a system according to independent claim 17. Additional aspects are set out in the accompanying dependent claims.

According to a first aspect of the present disclosure there is provided a method for latency determination in a substation network, the method being performed in a first electronic device of the substation network. The method comprises acquiring at least one data value; including the at least one data value as payload in a message of a precision time protocol, the message optionally further comprising a time stamp; addressing the message to at least one second electronic device; and transmitting the message to a relay device.

According to a second aspect of the present disclosure there is provided a method for latency determination in a substation network, the method being performed in a relay device of the substation network. The method comprises receiving a message of a precision time protocol from a first electronic device, wherein the message is addressed to at least one second electronic device and includes at least one data value as payload, the at least one data value having been included by the first electronic device, the message optionally further comprising a time stamp; determining a residence time duration relating to a time duration between reception of the message from the first electronic device to transmission of the message to the second electronic device; including (S18) in the message the residence time duration and a first link latency defined by a time duration between transmission of the message by the first electronic device and reception of the message by the relay device; and transmitting the message to the second electronic device or a further relay device.

According to a third aspect of the present disclosure there is provided a method for latency determination in a substation network, the method being performed in a second electronic device of the substation network. The method comprises receiving a message of a precision time protocol from a relay device, the message including at least one data value as payload, the at least one data value having been included by the first electronic device the message further comprising time stamp, the message further comprising a residence time duration relating to a time duration between reception of the message in the relay device from the first electronic device to transmission of the message in the relay device to the second electronic device and a first link latency defined by a time duration between transmission of the message by the first electronic device and reception of the message by the relay device.

Advantageously the disclosed methods alleviate the requirement to include a GPS clock in the substation / network, which instead may comprise a 1588 transparent clock enabled network and local clocks.

Advantageously the disclosed methods can be used both for native Ethernet and for Circuit Emulation over Internet Protocol (CEoIP) based inter substation communication in order to provide the data with a communication link latency.

Advantageously the disclosed methods enable the transmission starting time of the at least one data value at the first electronic device to be calculated and correlated to a local data time range.

Advantageously the disclosed methods can take implementational advantages of already existing time stamp units (TSU) in the physical communications layer of the communication protocol stack PHYs, existing hardware, as well as existing transparent clocks in network switches and routers.

Advantageously the disclosed methods do not result in any impact from redundancy link switch over.

According to a fourth aspect of the present disclosure there is provided a computer program for latency determination in a substation network, the computer program comprising computer program code which, when run on a processing unit, causes processing unit to perform a method according to at least one of the first aspect, the second aspect and the third aspect.

According to a fifth aspect of the present disclosure there is provided a computer program product comprising a computer program according to the fourth aspect and a computer readable means on which the computer program is stored.

According to a sixth aspect of the present disclosure there is provided a first electronic device for latency determination in a substation network. The first electronic device comprises a processing unit arranged to acquire at least one data value; the processing unit further being arranged to include the at least one data value as payload in a message of a precision time protocol, the message optionally further comprising a time stamp; the processing unit further being arranged to address the message to at least one second electronic device; and a transmitter arranged to transmit the message to a relay device.

According to a seventh aspect of the present disclosure there is provided a relay device for latency determination in a substation network. The relay device comprises a receiver arranged to receive a message of a precision time protocol from a first electronic device, wherein the message is addressed to at least one second electronic device and includes at least one data value as payload, the at least one data value having been included by the first electronic device, the message further comprising a time stamp; a processing unit arranged to determine a residence time duration relating to a time duration between reception of the message from the first electronic device to transmission of the message to the second electronic device; the processing unit further being arranged to in the message include the residence time duration and a first link latency defined by a time duration between transmission of the message by the first electronic device and reception of the message by the relay device; and a transmitter arranged to transmit the message to the second electronic device.

According to an eight aspect of the present disclosure there is provided a second electronic device for latency determination in a substation network. The second electronic device comprises a receiver arranged to receive a message of a precision time protocol from a relay device, the message including at least one data value as payload, the at least one data value having been included by a first electronic device, the message further comprising time stamp, the message further comprising a residence time duration relating to a time duration between reception of the message in the relay device from the first electronic device to transmission of the message in the relay device to the second electronic device and a first link latency defined by a time duration between transmission of the message by the first electronic device and reception of the message by the relay device.

It is to be noted that any feature of the first, second, third, fourth, fifth, sixth, seventh, and eight aspects may be applied to any other aspect, wherever appropriate. Likewise, any advantage of the first aspect may equally apply to the second, third, fourth, fifth, sixth, seventh, and/or eight aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise. Moreover, any step in a method need not necessarily have to be carried out in the presented order, unless explicitly stated otherwise.

### BRIEF DESCRIPTION OF THE DRAWINGS

The specific embodiments of the inventive concept will now be described, by way of example, with reference to the accompanying drawings, in which:
Fig 1 is a schematic diagram of a substation network;
Fig 2 schematically illustrates functional modules of an electronic device;
Fig 3 schematically illustrates functional modules of a relay device;
Fig 4 schematically illustrates computer program product;
Figs 5, 6 and 7 are flowcharts of methods for latency determination in a substation network; and
Figs 8, 9 and 10 are sequence diagrams according to embodiments.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout.

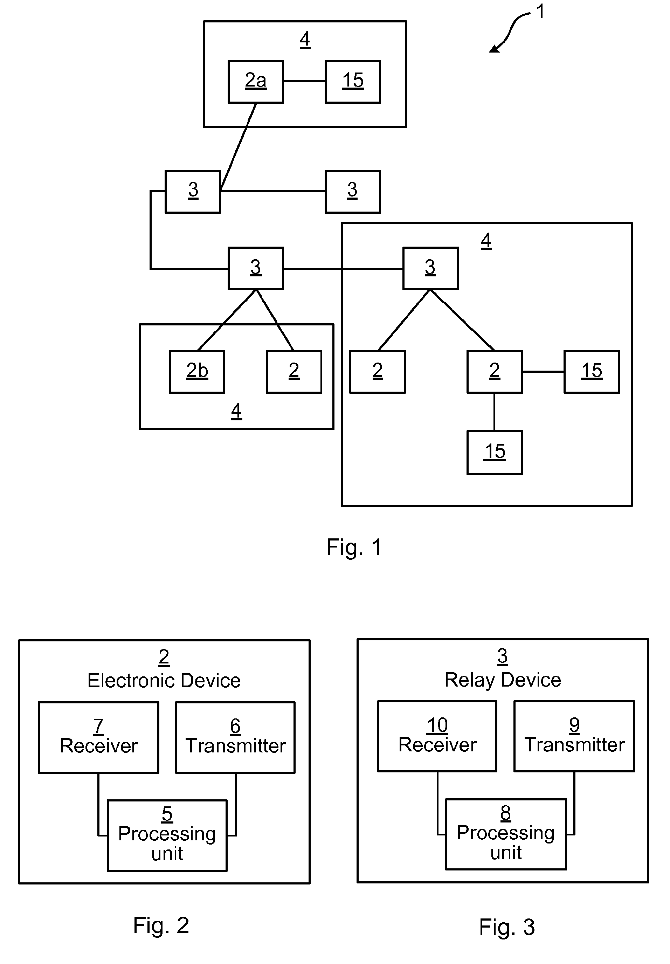

Fig 1 schematically illustrates parts of a substation network 1, which in turn may be a part of a power grid network. The substation network 1 comprises a number of electronic devices 2 (hereinafter represented by a first electronic device 2a and a second electronic device 2b) and a number of relay devices 3 interconnecting the electronic devices 2a, 2b. The electronic devices 2a, 2b may be so-called intelligent electronic devices, IEDs. As used in the electric power industry an IED is a microprocessor-based controller of power system equipment, such as circuit breakers, transformers, and capacitor banks. The electronic device 2a, 2b may be operatively coupled to at least one control device 15.

Each electronic device 2a, 2b is typically part of a substation 4. However, a substation 4 may comprise more than one electronic device 2a, 2b. A substation 4 is a node in the power grid network 1. The substation 4 serves the purpose of generating, transmitting, and distributing electric energy from power sources to consumers, such as industrial plants or households. A substation 4 generally comprises primary equipment (such as switchgears, breakers, transformers) and secondary equipment (such as sensors, merging units, the electronic devices 2a, 2b. As will be further disclosed below the relay device 3 may be part of an Ethernet transparent clock device 14, which in turn may be part of an Ethernet switch.

The secondary equipment is arranged mainly to protect and control the primary equipment by sensing, analysing and communicating various data. The data may be communicated, and hence exchanged, between different nodes (such as different substations 4), through Ethernet-based protocols, for example as defined by the IEC61850 standard.

As noted above, the substation 4 thus has a function of supplying power to consumers and includes a protection system that cuts off the supply of power to a position where a problem, such as an electric leakage, a ground fault, or the failure of a device, occurs immediately after the problem occurs. One prerequisite to perform efficient protection functions is therefore to have synchronized data provided by the various devices forming the secondary equipment. Depending on the considered function, the synchronization is either local, i.e. the devices of one substation 4 have to be synchronized (e.g. busbar protection function) or global, i.e. the devices from two different substations 4 have to be synchronized (e.g. line differential protection). From a synchronization performance point of view, different classes of synchronization are identified and range from 1 µsec (class T5) to 1 ms (class T1) through 4, 25 and 100 µsec.

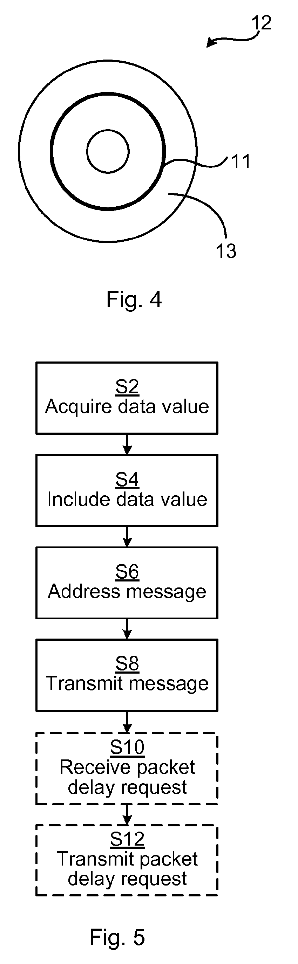

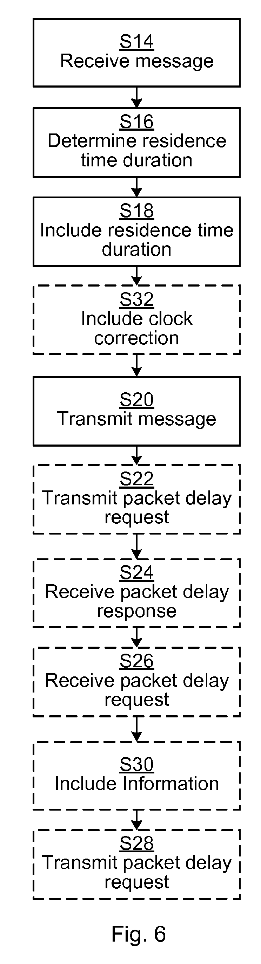

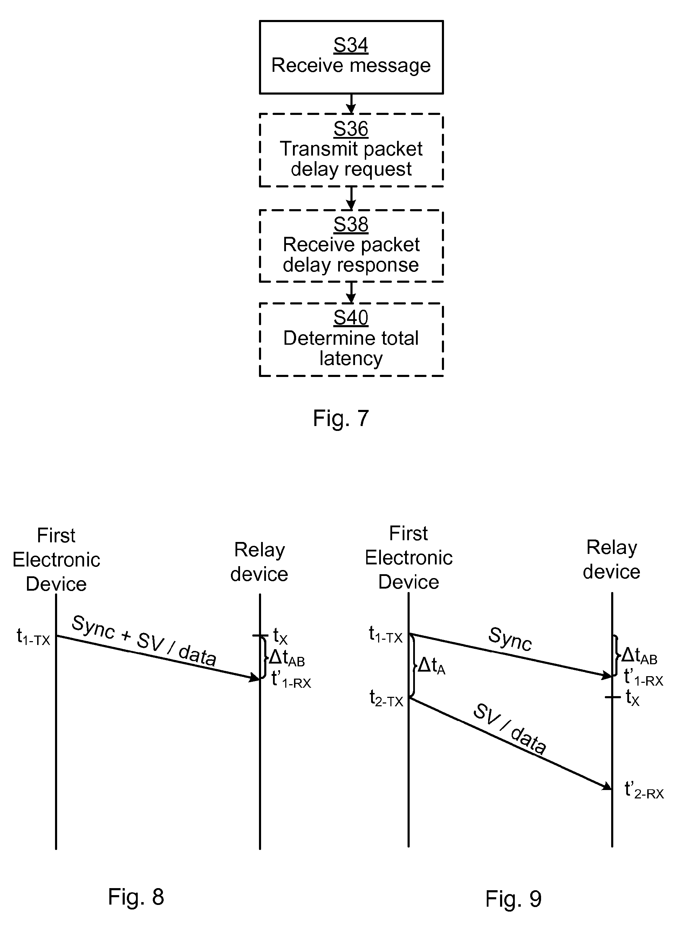

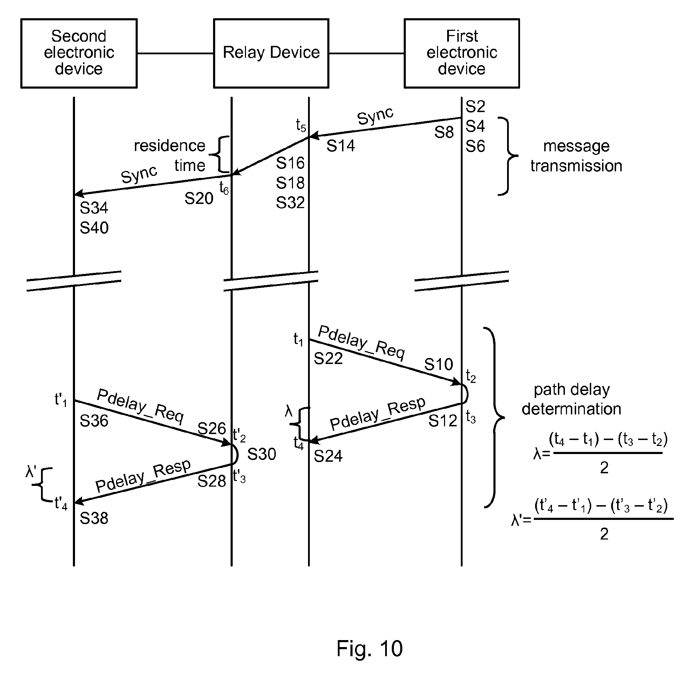

The operation of the first electronic device 2a, the second electronic device 2b and the relay device 3, including performing a method for latency determination in the substation network 1, will now be described in more detail with reference to the substation network of Fig 1, the electronic device 2 (taking the role of either the first electronic device 2a or the second electronic device 2b) of Fig 2, the relay device 3 of Fig 3, the computer program product of Fig 4, the flowcharts of Figs 5, 6 and 7 and the sequence diagrams of Figs 8, 9 and 10.

Fig 2 illustrates an electronic device 2. The electronic device comprises a processing unit 5, a transmitter 6, and a receiver 7, collectively enabling the electronic device to perform the herein disclosed subject matter associated with the first electronic device 2a and/or the second electronic device 2b. As noted above, the electronic device 2 may be an intelligent electronic device, IED. As also noted above, the electronic device 2 may be part of a substation 4.

Fig 3 illustrates a relay device 3. The relay device 3 comprises a processing unit 8, a transmitter 9, and a receiver 10, collectively enabling the relay device 3 to perform the herein disclosed subject matter associated with the relay device 3. The relay device 3 may be part of an IEEE 1588 transparent clock device 14, which in turn may be part of an Ethernet switch. Transparent clocks (also termed enhanced Ethernet switches) are arranged to measure and adjust for packet delay. The transparent clock device 14 is arranged to measure the time taken for a PTP event message to transit the device and provides this information to clocks receiving this PTP event message. The transparent clock device 14 may be a so-called peer-to-peer transparent clock device 14.

A peer-to-peer transparent clock device 14 is a transparent clock that, in addition to providing PTP event transit time information, also is arranged to provide corrections for propagation delay of the transmission link associated with the port receiving the PTP event message. In the presence of peer-to-peer transparent clocks, delay measurements between slave clocks and the master clock are commonly performed using a peer delay measurement mechanism.

Ethernet switches enable a fully available, full-duplex communication path between the electronic devices as well as other Ethernet switches (and hence also other relay devices 3) operatively connected in a network 1. Ethernet switches use address information contained within data packets to determine their correct destination and forward them to the appropriately addressed destinations. If multiple messages are due to exit a switch port at the same moment, the switch uses a buffer so that packets are not lost. In the event of the buffers becoming full, the switch will send pause frames to packet senders to delay transmission.

The methods are advantageously provided as computer programs 11. Fig 4 shows one example of a computer program product 12 comprising computer readable means 13. On this computer readable means 13, a computer program 11 can be stored, which computer program 11 can cause the processing units 5, 8 and thereto operatively coupled entities and devices to execute methods according to embodiments described herein. In the example of Fig 4, the computer program product 12 is illustrated as an optical disc, such as a CD (compact disc) or a DVD (digital versatile disc) or a Blu-Ray disc. The computer program product could also be embodied as a memory (RAM, ROM, EPROM, EEPROM) and more particularly as a non-volatile storage medium of a device in an external memory such as a USB (Universal Serial Bus) memory. Thus, while the computer program 11 is here schematically shown as a track on the depicted optical disk, the computer program 11 can be stored in any way which is suitable for the computer program product 12.

The standard IEEE1588v2 is also known as the Precision Clock Synchronization Protocol for Networked Measurement and Control Systems (or the Precision Time Protocol (PTP) for short) and is an industry-standard protocol that enables the precise transfer of frequency and time to synchronise clocks over packet-based Ethernet networks.

The operation of PTP in its original context relies on a measurement of the communication path delay (latency) between the time source, referred to as a master device, and the receiver, referred to as a slave device. PTP has been designed as an improvement to current methods of synchronization within a distributed network of devices. By means of the PTP a local slave clock in each network device can be synchronised with a system grandmaster clock. PTP is based generally on traffic time-stamping, with sub-nanoseconds granularity, to deliver high accuracies of synchronization needed to ensure stability of the devices in the network. Time stamps between master and slave devices are sent within specific PTP packets and in its basic form the protocol is administration-free. The time stamps of incoming and outgoing packets may be recorded and assessed to ensure synchronisation of master and slave devices. Differences in time and frequency between clocks and subsequent equipment corrections may need to be evaluated, while clocks should be measured to ensure they are within their specified limits. The synchronization process thus involves a message transaction between the master device and the slave device where the precise moments of transmit and receive are measured, preferably at the hardware level. Messages containing current time information are adjusted to account for their path delay, therefore providing a more accurate representation of the time information conveyed. As applied to the enclosed embodiments a precision time protocol is used as a carrier for data values.

In a step S2 at least one data value is acquired. The at least one data value is acquired by the processing unit of the first electronic device 2a. The at least one data value may represent at least one sample value acquired by the first electronic device 2a. According to embodiments the at least one data value is generated by a control device 15 operatively coupled to the first electronic device 2a. Further, the at least one data value may in particular relate to a line differential protection application. The line differential protection application may require comparison of the at least one data value measured at the very same time, acquired at two different substations. Alternatively, the at least one data value may in particular relate to a busbar protection function within one substation.

The processing unit of the first electronic device 2a is in a step S4 arranged to include the at least one data value as payload in a message of a precision time protocol, PTP. The precision time protocol may be an IEEE 1588 compliant protocol. The message may be part of an IEEE 1588 sync frame.

Fig 8 illustrates an embodiment according to which the at least one data value is added to the IEEE 1588 sync frame by piggybacking. A type length value (TLV) field in the existing IEEE 1588 sync frame is defined for the data transfer. At the relay device 3 the time for transmission of the sync frame by the first electronic device 2a may be determined as tₓ = t'_{1-RX} - Δt_{AB} where t'_{1-RX} is the time of reception for the message at the relay device ₃ and where ΔT_{AB} is the time duration for transmission of the sync message. ΔT_{AB} may by the relay device be determined by resolving the time stamp included in the sync message by the first electronic device 2a. Thus, at least theoretically tₓ as determined by the relay device 3 corresponds to the true point in time t_{1-TX} for transmission.

Fig 9 illustrates an exemplary embodiment according to which the at least one data value and the sync frame are sent separately. In a case the sync message is a separate message then also transmission as well as reception of time stamps may be required to determine the latency for the message comprising the at least one data value. At the relay device 3 the time for transmission of the at least one data value by the first electronic device 2a may be determined as tₓ = t'_{1-RX} - Δt_{AB} + Δt_{A} = t'_{1-RX} - Δt_{AB} + t_{2-TX} - t_{1-TX}, where Δt_{A} is the delay between the point in time t_{1-TX} for transmission of the sync message and the point in time t_{2-TX} for transmission of the frame comprising the at least one data value.

At least one of the messages may thus further comprises a time stamp; either the time stamp is transmitted implicitly as in the case of piggybacking (Fig 8), or explicitly as in the case of a separate sync message (Fig 9). The time stamp may thus relate to a time point for transmission of the message as measured by the first electronic device 2a. The message may further comprise information relating to the age of the at least one data value. Hence also this information may be included by the processing unit of the first electronic device 2a. For example, assume that the at least one data value has been further processed by the processing unit of the first electronic device 2a after having been acquired by the processing unit of the first electronic device 2a. Such processing may generally have a certain time duration. This time duration may be regarded as an internal delay, or latency, which should be exposed to the second electronic device 2b.

The thus composed message is addressed, in a step S6, to at least one second electronic device 2b. The thus addressed message is then transmitted, in a step S8, to a relay device 3. The message is transmitted by the transmitter of the first electronic device 2a.

The message is in a step S14 received by the relay device 3. The message is received by the receiver of the relay device 3.

In general, the relay device 3 is arranged to forward received messages, such as sync messages. It may also be arranged to, before forwarding the received messages, include a time stamp in the messages. The time stamp may provide information relating to at which point in time the message was received by the relay device 3 and at which point in time the message was transmitted (forwarded) by the relay device 3. The duration in time between reception and transmission of the message is denoted residence time. The processing unit of the relay device 3 is thus in a step S16 arranged to determine the residence time duration relating to a time duration between reception of the message from the first electronic device 2a to transmission of the message to the second electronic device 2b. This information is added to the message. A first link latency defined by a time duration between transmission of the message by the first electronic device and reception of the message by the relay device is also added to the message. The first latency represents a peer-delay. Determination of the first latency will be disclosed below. Hence, the processing unit of the relay device 3 is in a step S18 arranged to include the thus determined residence time duration and the first link latency in the message. The relay device 3 thus relays the message comprising the at least one data value from the first electronic device 2a and may add to it clock correction information in order to compensate for its own residence time duration and the peer-delay for the link on which the message was received. The message transmitted by the first electronic device 2a thereby "collects" latency as an IEEE 1588 sync frame on its way towards the second electronic device 2b.

As further explained below, the relay device 3 is further be arranged to include a peer-delay value in the message, the peer-delay value relating to latency of the transmission link on which the message was received. The peer-delay value may be transmitted in a separate message. Also clock correction information may, in a step S32, be included in the message by the processing unit of the relay device 3 prior to transmitting the message to the second electronic device 2b.

In a step S20 the message including the residence time duration and the first link latency is transmitted to the second electronic device 2b. The message is transmitted by the transmitter of the relay device 3. Alternatively the message including the residence time duration and the first link latency is transmitted to another relay device 3, which in turn may transmit the message to the second electronic device 2b.

The message transmitted by the transmitter of the relay device 3 is in a step S34 received by the second electronic device 2b.

In general, the path delay measurement process of PTP involves precision timing of two messages; a sync message as well as a delay request. Further messages may thus also be transmitted by the transmitter of the first electronic device 2a to the relay device 3. The further messages may relate to path delay calculations. According to embodiments the further messages are separated from the above disclosed message.

For example, a 10 Mbit/second Ethernet link is slower than a 100 Mbit/second Ethernet link. A first delay request may therefore relate to the first link latency X between the first electronic device 2a and the relay device 3 (as will be disclosed below a second link latency λ' relates to the latency of the transmission link between the first electronic device 2a and the relay device 3).

Thus, the transmitter of the relay device 3 is arranged to, in a step S22, transmit a first packet delay request to the first electronic device 2a. The first packet delay request relates to a first link latency between transmission of the message by the first electronic device 2a and reception of the message by the relay device 3. The first packet delay request may be an IEEE 1588 Pdelay_Req message.

The first packet delay request is in a step S10 received by the receiver of the first electronic device 2a. As a response thereto, the transmitter of the first electronic device 2a is arranged to, in a step S12, transmit a first packet delay response to the relay device 3. The first packet delay response may comprise the local point in time (i.e. the point in time according to the internal clock of the first device) for when the first packet delay request was received by the first electronic device 2a as well as the local point in time for when the first packet delay response is transmitted by the first electronic device 2a. The first packet delay response thereby determines the first link latency. The first packet delay response may be an IEEE 1588 Pdelay_Resp message. In a step S24 the first packet delay response is received by the receiver of the relay device 3. The relay device 3 is thereby able to determine the peer-delay associated X with the transmission link between the first electronic device 2a and the relay device 3. That is, X = ((t₄-t₁))-(t₃-t₂))/2, where t₁ is the point in time for transmission of the first Pdelay_req, where t₂ is the point in time for reception of the first Pdelay_req, where t₃ is the point in time for transmission of the first Pdelay_resp, and where t₄ is the point in time for reception of the first Pdelay_resp involving the first electronic device 2a and the relay device 3.

A second packet delay request may relate to the link latency between the relay device 3 and the second electronic device 2b. Thus, the transmitter of the second electronic device 2b is arranged to, in a step S36, transmit a second packet delay request to the relay device 3. The second packet delay request relates to a second link latency between transmission of the message by the relay device 3 and reception of the message by the second electronic device 2b. The second packet delay request may be an IEEE 1588 Pdelay_Req message. The second packet delay request is in a step S26 received by the receiver of the relay device 3. As a response thereto, the transmitter of the relay device 3 is arranged to, in a step S28, transmit a second packet delay response to the second electronic device 2b. In a step S38 the second packet delay response is received by the receiver of the second electronic device 2b which thereby is able to determine the peer-delay λ' associated with the transmission link between the relay device 3 and the second electronic device 2b. The second packet delay response may be an IEEE 1588 Pdelay_Resp message. That is, X' = ((t'₄-t'₁))-(t'₃-t'₂))/2, where t\ is the point in time for transmission of the second Pdelay_req, where t'₂ is the point in time for reception of the second Pdelay_req, where t'₃ is the point in time for transmission of the second Pdelay_resp, and where t'₄ is the point in time for reception of the second Pdelay_resp involving the second electronic device 2b and the relay device 3.

The processing unit of the relay device 3 may be arranged to, in a step S30, also include information relating to the first link latency in the second packet delay response. The second packet delay response may thus further comprise the first link latency value between transmission of the message by the first electronic device 2a and reception of the message by the relay device 3. The processing unit of the second electronic device 2b may then be arranged to, in a step S40, a total latency between the first electronic device 2a and the second electronic device 2b by adding the first link latency, the second link latency and the residence time duration.

According to embodiments, it is assumed that the transmission time from the first electronic device 2a to the relay device 3 is the same as the transmission time from the relay device 3 to the first electronic device 2a. An average value of the transmission time may then be taken as a mean value of the the transmission time from the first electronic device 2a to the relay device 3 and the transmission time from the relay device 3 to the first electronic device 2a. This average value may be provided to the second electronic device 2b in addition to the time stamp, the residence time duration, and/or the information relating to the age of the at least one data value.

The steps relating to determination of the first link latency and the second link latency may be separated from the transmission of sync messages and hence also separated from transmission of the at least one data value. In general, the steps relating to determination of the the first link latency and the second link latency are performed less often than the steps relating to transmission of the at least one data value. Data values (which as noted above may be part of the sync message) are generally transmitted several times per second. Until updated values of the first link latency and the second link latency are available, the message may thus comprise a previously determined value of the first link latency and/or a previously determined value of the second link latency.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A method for latency determination in a substation network (1), the method being performed in a first electronic device (2a) of the substation network, the method comprising:
acquiring (S2) at least one data value the at least one data value representing at least one sample value acquired by the first electronic device;
including (S4) the at least one data value as payload in a sync message of a precision time protocol, the sync message optionally further comprising a time stamp;
addressing (S6) the sync message to at least one second electronic device (2b); and
transmitting (S8) the sync message to a relay device (3).

2. The method according to claim 1, further comprising:
receiving (S10) a first packet delay request from the relay device, the first packet delay request relating to a first link latency defined by a time duration between transmission of the sync message by the first electronic device and reception of the sync message by the relay device; and in response thereto
transmitting (S12) a first packet delay response to the relay device, the first packet delay response determining the first link latency.

3. A method for latency determination in a substation network (1), the method being performed in a second electronic device (2b) of the substation network, the method comprising:
receiving (S34) a sync message of a precision time protocol from a relay device (3), the sync message including at least one data value as payload, the at least one data value having been included by a first electronic device (2a), the at least one data value representing at least one sample value acquired by the first electronic device, the sync message optionally further comprising a time stamp, the sync message further comprising a residence time duration relating to a time duration between reception of the sync message in the relay device from the first electronic device to transmission of the sync message in the relay device to the second electronic device and a first link latency defined by a time duration between transmission of the sync message by the first electronic device and reception of the sync message by the relay device.

4. The method according to claim 3, further comprising:
transmitting (S36) a second packet delay request to the relay device, the second packet delay request relating to a second link latency defined by a time duration between transmission of the sync message by the relay device and reception of the sync message by the second electronic device; and
receiving (S38) a second packet delay response from the relay device, the second packet delay response determining the second link latency.

5. The method according to claim 4, wherein the second packet delay response further comprises the first link latency.

6. The method according to claim 4 or 5, further comprising:
determining (S40) a total latency between the first electronic device and the second electronic device by adding the first link latency, the second link latency and the residence time duration.

7. The method according to any one of the preceding claims, wherein the precision time protocol is an IEEE 1588 compliant protocol.

8. The method according to any one of the preceding claims, wherein the sync message is part of an IEEE 1588 sync frame.

9. The method according to any one of the preceding claims, wherein the first and/or second electronic device is an intelligent electronic device, IED.

10. The method according to any one of the preceding claims, wherein the first and/or second electronic device is part of a substation (4).

11. The method according to any one of the preceding claims, wherein the relay device is part of an IEEE 1588 transparent clock device (14).

12. The method according to any one of the preceding claims, wherein the at least one data value is generated by a control device (15) operatively coupled to the first electronic device.

13. A computer program (11) for latency determination in a substation network, the computer program comprising computer program code which, when run on at least one processing unit (5, 8), causes the at least one processing unit to perform a method according to any one of the preceding claims.

14. A computer program product (12) comprising a computer readable means (13) on which a computer program (11) according to claim 13 is stored.

15. A first electronic device (2a) for latency determination in a substation network (1), comprising:
a processing unit (5) arranged to acquire at least one data value, the at least one data value representing at least one sample value acquired by the first electronic device;
the processing unit further being arranged to include the at least one data value as payload in a sync message of a precision time protocol, the sync message optionally further comprising a time stamp;
the processing unit further being arranged to address the sync message to at least one second electronic device (2b); and
a transmitter (6) arranged to transmit the sync message to a relay device (3).

16. A second electronic device (2b) for latency determination in a substation network (1), comprising:
a receiver (7) arranged to receive a sync message of a precision time protocol from a relay device, the sync message including at least one data value as payload, the at least one data value having been included by a first electronic device, the at least one data value representing at least one sample value acquired by the first electronic device, the sync message optionally further comprising a time stamp, the sync message further comprising a residence time duration relating to a time duration between reception of the message in the relay device from the first electronic device to transmission of the sync message in the relay device to the second electronic device and a first link latency defined by a time duration between transmission of the sync message by the first electronic device and reception of the sync message by the relay device.

17. A system for latency determination in a substation network (1), comprising:
a first electronic device (2a) according to claim 15;
a second electronic device (2b) according to claim 16; and
a relay device (3), comprising:
a receiver (10) arranged to receive a sync message of a precision time protocol from the first electronic device (2a), wherein the sync message is addressed to at least one second electronic device (2b) and includes at least one data value as payload, the at least one data value having been included by the first electronic device, the at least one data value representing at least one sample value acquired by the first electronic device, the sync message optionally further comprising a time stamp;
a processing unit (8) arranged to determine a residence time duration relating to a time duration between reception of the sync message from the first electronic device to transmission of the sync message to the second electronic device;
the processing unit (9) further being arranged to in the sync message include the residence time duration and a first link latency defined by a time duration between transmission of the sync message by the first electronic device and reception of the sync message by the relay device; and
a transmitter (9) arranged to transmit the sync message to the second electronic device.

18. The system according to claim 17, wherein:
the transmitter (9) is further arranged to transmit a first packet delay request to the first electronic device, the first packet delay request relating to the first link latency; and
the receiver (10) is further arranged to receive a first packet delay response from the first electronic device, the first packet delay response determining the first link latency.

19. The system according to claim 17 or 18, wherein:
the receiver (10) is further arranged to receive a second packet delay request from the at least one second electronic device or a further relay device, the second packet delay request relating to a second link latency between transmission of the sync message by the relay device and reception of the sync message by the at least one second electronic device or the further relay device; and in response thereto
the transmitter (9) is further arranged to transmit a second packet delay response to the at least one second electronic device or the further relay device, the second packet delay response determining the second link latency.

20. The system according to claim 19 when dependent on claim 18, wherein:
the processing unit (8) is further arranged to include information relating to the first link latency in the second packet delay response.

21. The system according to any one of claims 17 to 20, wherein:
the processing unit (8) is further arranged to include clock correction information in the sync message prior to transmitting the sync message to the second electronic device.

## Patentansprüche

1. Verfahren zur Latenzbestimmung in einem Substationsnetz (1), wobei das Verfahren in einer ersten elektronischen Vorrichtung (2a) des Substationsnetzes ausgeführt wird, wobei das Verfahren umfasst:
Beschaffen (S2) wenigstens eines Datenwerts, wobei der wenigstens eine Datenwert wenigstens einen Abtastwert repräsentiert, der durch die erste elektronische Vorrichtung beschafft wird;
Einschließen (S4) des wenigstens einen Datenwerts als Nutzlast in eine Synchronisationsnachricht ("Sync Message") eines Präzisionszeitprotokolls ("Precision Time Protocol"), wobei die Synchronisationsnachricht optional ferner einen Zeitstempel umfasst;
Adressieren (S6) der Synchronisationsnachricht an wenigstens eine zweite elektronische Vorrichtung (2b); und
Senden (S8) der Synchronisationsnachricht an eine Relaisvorrichtung (3).

2. Verfahren gemäß Anspruch 1, ferner umfassend:
Empfangen (S10) einer ersten Paketverzögerungsanforderung ("Packet Delay Request") von der Relaisvorrichtung, wobei sich die erste Paketverzögerungsanforderung auf eine erste Streckenlatenz bezieht, die durch eine Zeitdauer zwischen dem Senden der Synchronisationsnachricht durch die erste elektronische Vorrichtung und dem Empfangen der Synchronisationsnachricht durch die Relaisvorrichtung definiert ist; und in Reaktion darauf Senden (S12) einer ersten Paketverzögerungsantwort ("Packet Delay Response") an die Relaisvorrichtung, wobei die erste Paketverzögerungsantwort die erste Streckenlatenz bestimmt.

3. Verfahren zur Latenzbestimmung in einem Substationsnetz (1), wobei das Verfahren in einer zweiten elektronischen Vorrichtung (2b) des Substationsnetzes ausgeführt wird, wobei das Verfahren umfasst:
Empfangen (S34) einer Synchronisationsnachricht eines Präzisionszeitprotokolls von einer Relaisvorrichtung (3), wobei die Synchronisationsnachricht wenigstens einen Datenwert als Nutzlast einschließt, wobei der wenigstens eine Datenwert von einer ersten elektronischen Vorrichtung (2a) eingeschlossen worden ist, wobei der wenigstens eine Datenwert wenigstens einen Abtastwert repräsentiert, der durch die erste elektronische Vorrichtung beschafft wird, wobei die Synchronisationsnachricht optional ferner einen Zeitstempel umfasst, wobei die Synchronisationsnachricht ferner eine Verweilzeitdauer, welche sich auf eine Zeitdauer zwischen dem Empfangen der Synchronisationsnachricht in der Relaisvorrichtung von der ersten elektronischen Vorrichtung bis zum Senden der Synchronisationsnachricht in der Relaisvorrichtung an die zweite elektronische Vorrichtung bezieht, und eine erste Streckenlatenz, die durch eine Zeitdauer zwischen dem Senden der Synchronisationsnachricht durch die erste elektronische Vorrichtung und dem Empfangen der Synchronisationsnachricht durch die Relaisvorrichtung definiert ist, umfasst.

4. Verfahren gemäß Anspruch 3, ferner umfassend:
Senden (S36) einer zweiten Paketverzögerungsanforderung an die Relaisvorrichtung, wobei sich die zweite Paketverzögerungsanforderung auf eine zweite Streckenlatenz bezieht, die durch eine Zeitdauer zwischen dem Senden der Synchronisationsnachricht durch die Relaisvorrichtung und dem Empfangen der Synchronisationsnachricht durch die zweite elektronische Vorrichtung definiert ist; und
Empfangen (S38) einer zweiten Paketverzögerungsantwort von der Relaisvorrichtung, wobei die zweite Paketverzögerungsantwort die zweite Streckenlatenz bestimmt.

5. Verfahren gemäß Anspruch 4, wobei die zweite Paketverzögerungsantwort ferner die erste Streckenlatenz umfasst.

6. Verfahren gemäß Anspruch 4 oder 5, ferner umfassend:
Bestimmen (S40) einer Gesamtlatenz zwischen der ersten elektronischen Vorrichtung und der zweiten elektronischen Vorrichtung durch Addieren der ersten Streckenlatenz, der zweiten Streckenlatenz und der Verweilzeitdauer.

7. Verfahren gemäß einem der vorstehenden Ansprüche, wobei das Präzisionszeitprotokoll ein mit IEEE 1588 konformes Protokoll ist.

8. Verfahren gemäß einem der vorstehenden Ansprüche, wobei die Synchronisationsnachricht Bestandteil eines IEEE 1588 Synchronisationsrahmens ("Sync Frame") ist.

9. Verfahren gemäß einem der vorstehenden Ansprüche, wobei die erste und/oder die zweite elektronische Vorrichtung eine intelligente elektronische Vorrichtung ("Intelligent Electronic Device", IED) ist/sind.

10. Verfahren gemäß einem der vorstehenden Ansprüche, wobei die erste und/oder die zweite elektronische Vorrichtung Bestandteil einer Substation (4) ist.

11. Verfahren gemäß einem der vorstehenden Ansprüche, wobei die Relaisvorrichtung Bestandteil einer durchsichtigen Uhr nach IEEE 1588 ("Transparent Clock Device")(14) ist.

12. Verfahren gemäß einem der vorstehenden Ansprüche, wobei der wenigstens eine Datenwert durch eine Steuervorrichtung (15) erzeugt wird, welche operativ mit der ersten elektronischen Vorrichtung verbunden ist.

13. Computerprogramm (11) zur Latenzbestimmung in einem Substationsnetz, wobei das Computerprogramm Computerprogrammcode umfasst, der, wenn er auf wenigstens einer Verarbeitungseinheit (5, 8) ausgeführt wird, die wenigstens eine Verarbeitungseinheit veranlasst, ein Verfahren gemäß einem der vorstehenden Ansprüche auszuführen.

14. Computerprogrammprodukt (12), umfassend ein computerlesbares Mittel (13), auf dem ein Computerprogramm (11) gemäß Anspruch 13 gespeichert ist.

15. Erste elektronische Vorrichtung (2a) zur Latenzbestimmung in einem Substationsnetz (1), umfassend:
eine Verarbeitungseinheit (5), die dafür ausgelegt ist, wenigstens einen Datenwert zu beschaffen, wobei der wenigstens eine Datenwert wenigstens einen Abtastwert repräsentiert, der durch die erste elektronische Vorrichtung beschafft wird;
wobei die Verarbeitungseinheit ferner dafür ausgelegt ist, den wenigstens einen Datenwert als Nutzlast in eine Synchronisationsnachricht eines Präzisionszeitprotokolls einzuschließen, wobei die Synchronisationsnachricht optional ferner einen Zeitstempel umfasst;
wobei die Verarbeitungseinheit ferner dafür ausgelegt ist, die Synchronisationsnachricht an wenigstens eine zweite elektronische Vorrichtung (2b) zu adressieren; und
einen Sender (6), der dafür ausgelegt ist, die Synchronisationsnachricht an eine Relaisvorrichtung (3) zu senden.

16. Zweite elektronische Vorrichtung (2b) zur Latenzbestimmung in einem Substationsnetz (1), umfassend:
einen Empfänger (7), der dafür ausgelegt ist, eine Synchronisationsnachricht eines Präzisionszeitprotokolls von einer Relaisvorrichtung zu empfangen, wobei die Synchronisationsnachricht wenigstens einen Datenwert als Nutzlast einschließt, wobei der wenigstens eine Datenwert von einer ersten elektronischen Vorrichtung eingeschlossen worden ist, wobei der wenigstens eine Datenwert wenigstens einen Abtastwert repräsentiert, der durch die erste elektronische Vorrichtung beschafft wird, wobei die Synchronisationsnachricht optional ferner einen Zeitstempel umfasst, wobei die Synchronisationsnachricht ferner eine Verweilzeitdauer, welche sich auf eine Zeitdauer zwischen dem Empfangen der Nachricht in der Relaisvorrichtung von der ersten elektronischen Vorrichtung bis zum Senden der Synchronisationsnachricht in der Relaisvorrichtung an die zweite elektronische Vorrichtung bezieht, und eine erste Streckenlatenz, die durch eine Zeitdauer zwischen dem Senden der Synchronisationsnachricht durch die erste elektronische Vorrichtung und dem Empfangen der Synchronisationsnachricht durch die Relaisvorrichtung definiert ist, umfasst.

17. System zur Latenzbestimmung in einem Substationsnetz (1), umfassend:
eine erste elektronische Vorrichtung (2a) gemäß Anspruch 15;
eine zweite elektronische Vorrichtung (2b) gemäß Anspruch 16; und
eine Relaisvorrichtung (3), umfassend:
einen Empfänger (10), der dafür ausgelegt ist, eine Synchronisationsnachricht eines Präzisionszeitprotokolls von der ersten elektronischen Vorrichtung (2a) zu empfangen, wobei die Synchronisationsnachricht an wenigstens eine zweite elektronische Vorrichtung (2b) adressiert ist und wenigstens einen Datenwert als Nutzlast einschließt, wobei der wenigstens eine Datenwert von der ersten elektronischen Vorrichtung eingeschlossen worden ist, wobei der wenigstens eine Datenwert wenigstens einen Abtastwert repräsentiert, der durch die erste elektronische Vorrichtung beschafft wird, wobei die Synchronisationsnachricht optional ferner einen Zeitstempel umfasst;
eine Verarbeitungseinheit (8), die dafür ausgelegt ist, eine Verweilzeitdauer zu bestimmen, welche sich auf eine Zeitdauer zwischen dem Empfangen der Synchronisationsnachricht von der ersten elektronischen Vorrichtung bis zum Senden der Synchronisationsnachricht an die zweite elektronische Vorrichtung bezieht;
wobei die Verarbeitungseinheit (9) ferner dafür ausgelegt ist, in die Synchronisationsnachricht die Verweilzeitdauer sowie eine erste Streckenlatenz, die durch eine Zeitdauer zwischen dem Senden der Synchronisationsnachricht durch die erste elektronische Vorrichtung und dem Empfangen der Synchronisationsnachricht durch die Relaisvorrichtung definiert ist, einzuschließen; und
einen Sender (9), der dafür ausgelegt ist, die Synchronisationsnachricht an die zweite elektronische Vorrichtung zu senden.

18. System gemäß Anspruch 17, wobei:
der Sender (9) ferner dafür ausgelegt ist, eine erste Paketverzögerungsanforderung an die erste elektronische Vorrichtung zu senden, wobei sich die erste Paketverzögerungsanforderung auf die erste Streckenlatenz bezieht; und
der Empfänger (10) ferner dafür ausgelegt ist, eine erste Paketverzögerungsantwort von der ersten elektronischen Vorrichtung zu empfangen, wobei die erste Paketverzögerungsantwort die erste Streckenlatenz bestimmt.

19. System gemäß Anspruch 17 oder 18, wobei:
der Empfänger (10) ferner dafür ausgelegt ist, eine zweite Paketverzögerungsanforderung von der wenigstens einen zweiten elektronischen Vorrichtung oder einer weiteren Relaisvorrichtung zu empfangen, wobei sich die zweite Paketverzögerungsanforderung auf eine zweite Streckenlatenz zwischen dem Senden der Synchronisationsnachricht durch die Relaisvorrichtung und dem Empfangen der Synchronisationsnachricht durch die wenigstens eine zweite elektronische Vorrichtung oder die weitere Relaisvorrichtung bezieht; und in Reaktion darauf
der Sender (9) ferner dafür ausgelegt ist, eine zweite Paketverzögerungsantwort an die wenigstens eine zweite elektronische Vorrichtung oder die weitere Relaisvorrichtung zu senden, wobei die zweite Paketverzögerungsantwort die zweite Streckenlatenz bestimmt.

20. System gemäß Anspruch 19, wenn abhängig von Anspruch 18, wobei:
die Verarbeitungseinheit (8) ferner dafür ausgelegt ist, Informationen zu der ersten Streckenlatenz in die zweite Paketverzögerungsantwort einzuschließen.

21. System gemäß einem der Ansprüche 17 bis 20, wobei:
die Verarbeitungseinheit (8) ferner dafür ausgelegt ist, Uhrkorrekturinformationen in die Synchronisationsnachricht einzuschließen, bevor die Synchronisationsnachricht an die zweite elektronische Vorrichtung gesendet wird.

## Revendications

1. Procédé de détermination de la latence dans un réseau de sous-station (1), le procédé étant exécuté dans un premier dispositif électronique (2a) du réseau de sous-stations, le procédé comprenant :
l'acquisition (S2) d'au moins une valeur de données, l'au moins une valeur de données représentant au moins une valeur d'échantillon acquise par le premier dispositif électronique ;
l'inclusion (S4) de l'au moins une valeur de données comme charge utile dans un message de synchronisation d'un protocole de temps de précision, le message de synchronisation comprenant en outre optionnellement une estampille temporelle ;
l'adressage (S6) du message de synchronisation à au moins un second dispositif électronique (2b) ; et
la transmission (S8) du message de synchronisation à un dispositif relais (3).

2. Procédé selon la revendication 1, comprenant en outre :
la réception (S10) d'une première demande de retard de paquet depuis le dispositif relais, la première demande de retard de paquet concernant une première latence de liaison définie par une durée de temps entre la transmission du message de synchronisation par le premier dispositif électronique et la réception du message de synchronisation par le dispositif relais ; et en réponse à cela
la transmission (S12) d'une première réponse de retard de paquet au dispositif relais, la première réponse de retard de paquet déterminant la première latence de liaison.

3. Procédé de détermination de la latence dans un réseau de sous-stations (1), le procédé étant exécuté dans un second dispositif électronique (2b) du réseau de sous-stations, le procédé comprenant :
la réception (S34) d'un message de synchronisation d'un protocole de temps de précision depuis un dispositif relais (3), le message de synchronisation comportant au moins une valeur de données comme charge utile, l'au moins une valeur de données ayant été incluse par un premier dispositif électronique (2a), l'au moins une valeur de données représentant au moins une valeur d'échantillon acquise par le premier dispositif électronique, le message de synchronisation comprenant en outre optionnellement une estampille temporelle, le message de synchronisation comprenant en outre une durée de temps de séjour relative à une durée de temps entre la réception du message de synchronisation dans le dispositif relais depuis le premier dispositif électronique et la transmission du message de synchronisation dans le dispositif relais au second dispositif électronique et une première latence de liaison définie par une durée de temps entre la transmission du message de synchronisation par le premier dispositif électronique et la réception du message de synchronisation par le dispositif relais.

4. Procédé selon la revendication 3, comprenant en outre :
la transmission (S36) d'une seconde demande de retard de paquet au dispositif relais, la seconde demande de retard de paquet concernant une seconde latence de liaison définie par une durée de temps entre la transmission du message de synchronisation par le dispositif relais et la réception du message de synchronisation par le second dispositif électronique ; et
la réception (S38) d'une seconde réponse de retard de paquet depuis le dispositif relais, la seconde réponse de retard de paquet déterminant la seconde latence de liaison.

5. Procédé selon la revendication 4, dans lequel la seconde réponse de retard de paquet comprend en outre la première latence de liaison.

6. Procédé selon la revendication 4 ou 5, comprenant en outre :
la détermination (S40) d'une latence totale entre le premier dispositif électronique et le second dispositif électronique en ajoutant la première latence de liaison, la seconde latence de liaison et la durée de temps de séjour.

7. Procédé selon l'une quelconque des revendications précédentes, dans lequel le protocole de temps de précision est un protocole conforme à la norme IEEE 1588.

8. Procédé selon l'une quelconque des revendications précédentes, dans lequel le message de synchronisation fait partie d'une trame de synchronisation IEEE 1588.

9. Procédé selon l'une quelconque des revendications précédentes, dans lequel le premier et/ou second dispositif électronique est un dispositif électronique intelligent, IED.

10. Procédé selon l'une quelconque des revendications précédentes, dans lequel le premier et/ou second dispositif électronique fait partie d'une sous-station (4).

11. Procédé selon l'une quelconque des revendications précédentes, dans lequel le dispositif relais fait partie d'un dispositif d'horloge transparent IEEE 1588 (14).

12. Procédé selon l'une quelconque des revendications précédentes, dans lequel l'au moins une valeur de données est générée par un dispositif de commande (15) couplé fonctionnellement au premier dispositif électronique.

13. Programme informatique (11) de détermination de la latence dans un réseau de sous-stations, le programme informatique comprenant un code de programme informatique qui, à son exécution sur au moins une unité de traitement (5, 8), amène l'au moins une unité de traitement à exécuter un procédé selon l'une quelconque des revendications précédentes.

14. Produit de programme informatique (12) comprenant un moyen lisible par ordinateur (13) sur lequel est mémorisé un programme informatique (11) selon la revendication 13.

15. Premier dispositif électronique (2a) de détermination de la latence dans un réseau de sous-stations (1), comprenant :
une unité de traitement (5) agencée pour acquérir au moins une valeur de données, l'au moins une valeur de données représentant au moins une valeur d'échantillon acquise par le premier dispositif électronique ;
l'unité de traitement étant agencée en outre pour inclure l'au moins une valeur de données comme charge utile dans un message de synchronisation d'un protocole de temps de précision, le message de synchronisation comprenant en outre optionnellement une estampille temporelle ;
l'unité de traitement étant agencée en outre pour adresser le message de synchronisation à au moins un second dispositif électronique (2b) ; et
un émetteur (6) agencé pour transmettre le message de synchronisation à un dispositif relais (3).

16. Second dispositif électronique (2b) de détermination de la latence dans un réseau de sous-stations (1), comprenant :
un récepteur (7) agencé pour recevoir un message de synchronisation d'un protocole de temps de précision depuis un dispositif relais, le message de synchronisation comportant au moins une valeur de données comme charge utile, l'au moins une valeur de données ayant été incluse par un premier dispositif électronique, l'au moins une valeur de données représentant au moins une valeur d'échantillon acquise par le premier dispositif électronique, le message de synchronisation comprenant en outre optionnellement une estampille temporelle, le message de synchronisation comprenant en outre une durée de temps de séjour relative à une durée de temps entre la réception du message de synchronisation dans le dispositif relais depuis le premier dispositif électronique et la transmission du message de synchronisation dans le dispositif relais au second dispositif électronique et une première latence de liaison définie par une durée de temps entre la transmission du message de synchronisation par le premier dispositif électronique et la réception du message de synchronisation par le dispositif relais.

17. Système de détermination de la latence dans un réseau de sous-stations (1), comprenant :
un premier dispositif électronique (2a) selon la revendication 15 ;
un second dispositif électronique (2b) selon la revendication 16 ; et
un dispositif relais (3), comprenant :
un récepteur (10) agencé pour recevoir un message de synchronisation d'un protocole de temps de précision depuis le premier dispositif électronique (2a), le message de synchronisation étant adressé à au moins un second dispositif électronique (2b) et comportant au moins une valeur de données comme charge utile, l'au moins une valeur de données ayant été incluse par le premier dispositif électronique, l'au moins une valeur de données représentant au moins une valeur d'échantillon acquise par le premier dispositif électronique, le message de synchronisation comprenant en outre optionnellement une estampille temporelle ;
une unité de traitement (8) agencée pour déterminer une durée de temps de séjour relative à une durée de temps entre la réception du message de synchronisation depuis le premier dispositif électronique et la transmission du message de synchronisation au second dispositif électronique ;
l'unité de traitement (9) étant agencée en outre pour inclure dans le message de synchronisation la durée de temps de séjour et une première latence de liaison définie par une durée de temps entre la transmission du message de synchronisation par le premier dispositif électronique et la réception du message de synchronisation par le dispositif relais ; et
un émetteur (9) agencé pour transmettre le message de synchronisation au second dispositif électronique.

18. Système selon la revendication 17, dans lequel :
l'émetteur (9) est agencé en outre pour transmettre une première demande de retard de paquet au premier dispositif électronique, la première demande de retard de paquet concernant la première latence de liaison ; et
le récepteur (10) est agencé en outre pour recevoir une première réponse de retard de paquet depuis le premier dispositif électronique, la première réponse de retard de paquet déterminant la première latence de liaison.

19. Système selon la revendication 17 ou 18, dans lequel :
le récepteur (10) est agencé en outre pour recevoir une seconde demande de retard de paquet depuis l'au moins un second dispositif électronique ou un autre dispositif relais, la seconde demande de retard de paquet concernant une seconde latence de liaison entre la transmission du messages de synchronisation par le dispositif relais et la réception du message de synchronisation par l'au moins un second dispositif électronique ou l'autre dispositif relais ; et en réponse à cela
l'émetteur (9) est agencé en outre pour transmettre une seconde réponse de retard de paquet à l'au moins un second dispositif électronique ou l'autre dispositif relais, la seconde réponse de retard de paquet déterminant la seconde latence de liaison.

20. Système selon la revendication 19 dépendante de la revendication 18, dans lequel :
l'unité de traitement (8) est agencée en outre pour inclure des informations concernant la première latence de liaison dans la seconde réponse de retard de paquet.

21. Système selon l'une quelconque des revendications 17 à 20, dans lequel :
l'unité de traitement (8) est agencée en outre pour inclure des informations de correction d'horloge dans le message de synchronisation avant la transmission du message synchronisation au second dispositif électronique.
